# EUROPÄISCHE PATENTSCHRIFT

(11) **EP 1 374 999 B1**
(45) Veröffentlichungstag und Bekanntmachung des Hinweises auf die Patenterteilung: **17.08.2011**
(21) Anmeldenummer: 03009395.9
(22) Anmeldetag: 25.04.2003
(51) Int. Cl.: B02C 4/32, B02C 4/28

(54) **Walzenmühle**
Roller mill
Broyeur à rouleaux

(30) Priorität: 26.04.2002 DE 10218780; 26.04.2002 DE 10218779; 26.04.2002 DE 10218778; 26.04.2002 DE 10218777
(43) Veröffentlichungstag der Anmeldung: 02.01.2004
(73) Patentinhaber: Rieter-Werke GmbH, 78567 Konstanz (DE)
(72) Erfinder: Nether, Johannes-Michael, 78462 Konstanz (DE)
(74) Vertreter: Liesegang, Roland

(56) Entgegenhaltungen:
- DE-A1- 2 519 508
- DE-B- 1 227 313
- DE-B- 1 507 637
- JP-A- 2 265 657
- JP-A- 62 061 652
- US-A- 2 994 261

## Beschreibung

Die Erfindung betrifft eine Walzenmühle zur Zerkleinerung von grobkörnigem Material, insbesondere keramische Rohstoffe für die industrielle Verarbeitung, mit zwei Walzen, die im Abstand voneinander in einem Maschinenrahmen jeweils in zwei Lagerblöcken gegeneinander verstellbar gelagert sind, um den Walzenspalt auf einen definierten Wert einzustellen, wie aus der CH-A-420 805 bekannt. Im Walzenspalt wird das Material zerkleinert und Grobkorn zerstört.

Bei derartigen Walzenmühlen ist bekannt, die beiden Lagerblöcke mindestens einer Walze im Maschinenrahmen mittels einer Verstelleinrichtung relativ zu den Lagerblöcken der anderen Walze entgegen der Kraft einer Dämpfungseinrichtung verschiebbar anzuordnen. Dabei kann eine Überlastsicherung vorgesehen sein, die eine Entlastung der Walzen bzw. einen Stop auslöst, wenn die durch das Material erzeugte Spreizkraft auf die beiden Walzen einen zulässigen Wert überschreitet.

Bei bisherigen Walzenmühlen sind die Lagerblöcke über an Zugankern aufgehängte Brücken am Maschinenrahmen abgestützt. Die Zuganker dehnen sich im Betrieb proportional zu den durch das Material auf die Walzen aufgebrachten Spreizkräften. Die Steifigkeit der Walzenmühle und damit die Konstanz des Walzenspaltes wird allein durch den Querschnitt der Zuganker bestimmt.

Aus DE-A-1227313 ist ein Walzenbrecher mit zwei Brechwalzen bekannt, die an einem Maschinengestell über verschiebbare Walzenlager getragen sind.

Mit der Erfindung soll eine Walzenmühle mit deutlich erhöhter Steifigkeit und somit verbessertem Mahlergebnis geschaffen werden. Zur Lösung dieser Aufgabe dient Anspruch 1.

Bei der Walzenmühle nach der Erfindung werden die auf die Walzen ausgeübten Spreizkräfte direkt mittels der Brücken auf Holme des Maschinenrahmens übertragen, so daß der Zuganker vermieden und der Querschnitt der Holme für die Krafteinleitung der Walzenspreizkräfte in den Maschinenrahmen voll ausgenutzt werden kann. Hierdurch wird die Steifigkeit deutlich erhöht, was ein besseres Mahlergebnis zur Folge hat, d.h. ein bei gleicher Spaltweite gleichmäßigeres und feineres Kornband aus dem gemahlenen Material im Vergleich zu den bisherigen Walzenmühlen.

Vorteilhafte Ausgestaltungen der Erfindung sind in den Unteransprüchen angegeben. Besonders bevorzugt ist dabei einer Weiterbildung der Erfindung, bei der die Lagerblöcke beider Walzen jeweils über eine Dreipunktabstützung am Maschinenrahmen abgestützt sind, wobei ein Abstützpunkt der Brücke und die beiden übrigen Abstützpunkte einem die Holme des Maschinenrahmens miteinander verbindenden Steg zugeordnet sind. Der Steg und die Holme bilden einen sogenannten Seitenständer, von denen je einer die beiden Lagerblöcke für die einen Enden der beiden Walzen abstützt. Am Boden sind die beiden Seitenständer über ein Maschinenbett und oben über zwei Traversen miteinander verbunden, welche sich oberhalb der Walzen in Richtung von deren Längsachsen erstrecken.

Durch die Anordnung der Brücken mit ihren Brückenenden in gegenüberliegenden Ausnehmungen der Holme wird ein Formschluß erzeugt. Dieser Formschluß kann durch eine Verbindung der Brückenenden mit den Holmen über Paßstifte unterstützt werden. Davon abgesehen ist stets eine lösbare Verbindung zwischen den Stützabschnitten der Brückenenden mit den Holmen vorgesehen, beispielsweise mittels Schrauben, die in Richtung parallel zur Verstelleinrichtung der Walzen angeordnet sind.

Die Paßstifte können sich dann erübrigen, wenn gemäß einer weiteren vorteilhaften Ausgestaltung der Erfindung die Form der Holme durch konkave Krümmung in Längsrichtung und durch große, über die Brücken hinausreichende Überhänge über die Brücken hinaus optimiert ist, insbesondere unter Einsatz eines Computers mittels eines numerischen Verfahrens.

Die Lagerung der Walzen von Walzenmühlen wird durch die großen, auf die Walzen ausgeübten Kräfte wechselnder Größe und Richtung hohen Beanspruchungen und starkem Verschleiß ausgesetzt. Es ist deshalb eine Anforderung an eine derartige Lagerung, daß sie bei hoher Steifigkeit der Lagerabstützung ermöglicht, das Lagerspiel zu minimieren. Gleichzeitig soll die Lagerung ein Verstellung der Walzen relativ zueinander sowohl in Querrichtung zur Einstellung des Walzenspaltes als auch in Achsrichtung von außen her ermöglichen.

Diese teilweise miteinander in Widerstreit stehenden Anforderungen werden durch eine Walzenmühle gemäß Patentanspruch 12 gelöst.

Demgemäß weist zumindest eine der beiden Walzen ein Lagerpaar mit einem Festlager am einen Ende der Walzenwelle und einem Loslager am anderen Ende der Walzenwelle auf. Jedes Lager hat einen Lagertopf in Gestalt eines geschlossenen Ringes, der ein Gleit- oder Wälzlager umgibt und von einem Lagerblock eingeklemmt ist. Der Lagertopf des Festlagers ist mitsamt der Walzenwelle und somit der Walze relativ zu seinem Lagerblock und relativ zum Loslager in Achsrichtung einstellbar, um die eine Walze bezüglich der anderen Walze längsausrichten zu können.

Aus der DE 43 01 589 A1 ist eine Walzenlagerung einer Walzenmühle mit einem Loslager und einem Festlager sowie einem zusätzlichen Axiallager bekannt.

Gemäß einer vorteilhaften Ausführung ist jeder Lagerblock C-förmig mit innen kreiszylindrischer Kontur zur Einfassung des Umfangs des Lagertopfes ausgebildet und mit seinen C-Schenkeln mittels einer Klemmverbindung, beispielsweise in Gestalt von Klemmschrauben, an den Umfang des Lagertopfes anpreßbar.

Bei einer vorteilhaften konstruktiven Ausgestaltung der Lagerung hat der Lagertopf einen axial neben dem Lagerblock angeordneten Stellring, über den der Lagertopf mittels eines Kranzes von Anpreßschrauben und Abdrückschrauben axial bezüglich des Lagerblockes verstellbar ist.

Eine Lagerung nach Patentanspruch 12 gestattet einerseits eine Einstellung der Walzen relativ zueinander in deren Achsrichtung und andererseits in deren Querrichtung zur Einstellung des Walzenspaltes. Der Lagertopf jeder Lagerung ist durch den C-förmigen Lagerblock versteift, sobald dieser Lagerblock um den Lagertopf festgeklemmt ist. In nicht geklemmten Zustand läßt sich jedoch der Lagertopf des Festlagers mitsamt der Walzenwelle relativ zu seinem Lagerblock und zum Loslager in Achsrichtung problemlos verstellen. Zur Einstellung des Walzenspaltes werden beide Lagerblöcke jeder Walze synchron und parallel in Richtung quer zur Achsrichtung der Walzen gegenüber dem Maschinenrahmen gesteuert verschoben.

Bei einer Walze einer Walzenmühle zum Zerkleinern grobkörnigen Materials mit einem Walzenkörper und einem Walzenmantel, wie aus der US-A-1 149 626 bekannt, ist der Walzenmantel durch Reibschluß zwischen konischen Umfangsflächen innen am Walzenmantel sowie außen am Walzenkörper bzw. an einem damit verschraubten Ring verbunden. Solche Walzenmäntel sind hoher Beanspruchung ausgesetzt und starkem Verschleiß unterworfen. Sie müssen deshalb von Zeit zu Zeit gewartet oder ausgetauscht werden.

Es besteht daher das Bedürfnis nach einer lösbaren Verbindung zwischen Walzenmantel und Walzenkörper, die einerseits sicher und genau und andererseits leicht lösbar ist.

Bei einer Walze gemäß der Erfindung sind Walzenmantel und Walzenkörper miteinander einerseits durch Reibschluß konischer Umfangsflächen innen am Walzenmantel und außen am Walzenkörper und andererseits mittels Paßkörpem verbunden, die in Formschluß mit dem Walzenkörper und dem Walzenmantel stehen. Die formschlüssigen Paßkörper übertragen die großen, im Betrieb aufgebrachten Drehmomente und entlasten dadurch die Konusverbindung zwischen Innenkonus des Walzenmantels und Außenkonus des Walzenkörpers. Somit wird eine zu hohe Flächenpressung in der Konusverbindung vermieden, was die Demontage erleichtert und die Konusflächen auch bei langer Gebrauchsdauer stets zu einer exakten Zentrierung des Walzenkörpers zum Walzenmantel befähigt.

Die Verbindung von Walzenmantel und Walzenkörper gemäß der Erfindung führt zu einer vereinfachten Montage unabhängig von Temperaturschwankungen und vor allem zu einer deutlich einfacheren Demontage des Walzenmantels vom Walzenkörper.

Ein Schaber kann für die Walzen einer Walzenmühle zum Zerkleinern von grobkörnigem Material, beispielsweise keramischem Material eingesetzt werden. Solches Material hat eine Neigung zum Ankleben und Antrocknen von Materialteilen am Walzenumfang, was die Walzenfunktion beeinträchtigen kann. Es ist deshalb üblich, einen solchen Schaber im Betrieb ständig an den Walzenumfang angedrückt zu halten. Die Schneide eines derartigen Schabers ist hoher Beanspruchung und hohem Verschleiß ausgesetzt. Außerdem soll ein derartiger Schaber vom Walzenumfang wegstellbar sein, um den Walzenumfang und/oder den Schaber zu reinigen. Zu diesen Zwecken ist ein Schaber bekannt, der eine auswechselbare Schneide hat und an den Schaber anstellbar und davon wegstellbar ausgebildet ist (DE 93 16 427 U1).

Um einerseits die Schaberschneide einfach und schnell wechseln zu können, andererseits aber die Schaberschneide in montiertem Zustand sicher und genau am Schaber positionieren zu können, ist ein Schaber vorgesehen.

Bei dem Schaber ist die Schaberschneide auswechselbar an einem Schaberhalter befestigt. Der Schaberhalter ist seinerseits an einer Quertraverse mittels einer Stift-/Schlitz-Verbindung nach Art einer Bajonettverbindung gehalten. Die Quertraverse ist ihrerseits bezüglich der zugehörigen Walze verstellbar, um den Schaber an die Walze anzustellen oder davon wegzustellen.

Die mehreren Stift-/Schlitz-Paare gewährleisten eine eindeutige Lagepositionierung des Schalberhalters mit Schaberschneide bezüglich der Quertraverse, weil jedes Stift-/Schlitz-Paar andere Abmessungen als die übrigen Stift-/Schlitz-Paare hat.

Bei einer vorteilhaften konstruktiven Ausführung sind die Schlitze der Schlitz-/Stift-Paare in der Quertraverse zunächst steil und danach flach bezüglich der Kante der Quertraverse geformt, von der die Schlitze ausgehen.

Um die Montage und die Demontage zu erleichtern und die Verbindung zwischen Schaberhalter und Quertraverse zusätzlich zu sichern, ist gemäß einer besonders vorteilhaften Ausgestaltung der Erfindung eine Montage- und Feststellvorrichtung zur Montage, zum Sichern und zur Demontage des Schaberhalters bezüglich der Quertraverse vorgesehen. Diese Montageund Feststellvorrichtung kann eine Kraft in Richtung parallel zur Schaberschneide zwischen Schaberhalter und Quertraverse aufbringen, um die Stifte der Stift-/Schlitz-Paare in montiertem Zustand des Schaberhalters gegen den Grund des zugehörigen Schlitzes in der Quertraverse gedrückt zu halten.

Die Montage- und Feststellvorrichtung kann eine von Hand zu bedienende Kniehebeleinrichtung aufweisen, welche ein Einschieben und gleichzeitiges Absenken der Schaberschneide in eine Längsnut der Quertraverse durch kontrolliertes Einfahren der beispielsweise am Schaberhalter befindlichen Stifte in die zugehörigen Schlitze an der Quertraverse gestattet.

Die Schaberschneide kann an dem Schaberhalter beispielsweise mittels mehrerer Schraubverbindungen lösbar befestigt sein.

Bei dem Schaber läßt sich der Schaberhalter und die damit verbundene Schaberschneide mit hoher Positioniergenauigkeit schnell montieren und demontieren, wobei in montiertem Zustand eine zuverlässige Sicherung gegen Lösen des Schaberhalters von der Quertraverse gewährleistet ist.

Die Erfindung ist im folgenden anhand schematischer Zeichnungen an zwei Ausführungsbeispielen mit weiteren Einzelheiten näher erläutert. Es zeigen:
- Fig. 1: eine bevorzugte, besonders vorteilhafte Ausführung der Erfindung einer Walzenmühle gemäß der Erfindung in einer perspektivischen Darstellung;
- Fig. 2: eine Ansicht der Walzenmühle nach Fig. 1 in Richtung des Pfeiles II in Fig. 1, wobei Teile, wie ein Schwungrad und eine Antriebseinheit weggelassen sind, um den Blick auf einen der beiden Seitenständer mit eingebauten Walzen und Lagerblöcken dafür freizugeben;
- Fig. 3: eine perspektivische Darstellung in einer gegenüber Fig. 1 um 90° um eine Hochachse gedrehten Lage einer einfacher als beim Ausführungsbeispiel nach den Fig. 1 und 2 ausgebildeten Walzenmühle;
- Fig. 4a: eine Betriebsposition einer Brücke zur Abstützung eines Lagerblocks einer Walze im Maschinenrahmen;
- Fig. 4b: eine erste Demontageposition der Brücke;
- Fig. 4c: eine zweite Demontageposition der Brücke;
- Fig. 5: eine in einer vertikalen Ebene durch einen Seitenständer geschnittene Ansicht der Walzenmühle nach Fig. 3 mit einer Paßstiftverbindung zwischen Brücke und Maschinenrahmen;
- Fig. 6: einen Lagerblock mit Lagertopf für ein Wellenende einer Walze in perspektivischer Darstellung;
- Fig. 7: eine Seitenansicht des Lagerblocks mit Lagertopf und Lager;
- Fig. 8: eine Seitenansicht des Lagerblocks nach Fig. 2;
- Fig. 9: einen Schnitt nach der Linie V-V in Fig. 8;
- Fig. 10: eine Walze der Walzenmühle mit Welle und Lagerung in Gestalt eines Festlagers am rechten Ende und eines Loslagers am linken Ende gemäß der Erfindung;
- Fig. 11: einen Teilschnitt durch eine Walze gemäß der Erfindung in Richtung der Rotationsachse der Walze;
- Fig. 12: eine Teilansicht in Richtung des Pfeiles II in Fig. 11;
- Fig. 13: eine schematische Darstellung eines Schaberhalters gemäß der Erfindung in einer an den Umfang einer Walze angestellten Position und in einer von der Walze weggestellten Position;
- Fig. 14: einen Querschnitt durch einen Schaberhalter mit darin montierter Schaberschneide;
- Fig. 15: eine Stirnansicht einer Quertraverse;
- Fig. 16: eine Stirnansicht der Quertraverse nach Fig. 15 mit darin montiertem Schaberhalter mit Schaberschneide in Schnittdarstellung wie Fig. 14;
- Fig. 17: einen Schaber gemäß der Erfindung in einer perspektivischen Darstellung in montiertem Zustand eines Schaberhalters an einer Quertraverse;
- Fig. 18: in einer perspektivischen Darstellung wie Fig. 17 den Schaber mit von der Quertraverse demontiertem Schaberhalter;
- Fig. 19a bis Fig. 19d: vier Stift-/Schlitz-Positionen beim Wechsel von dem montiertem Schaberhalter gemäß Fig. 17 zum demontierten Schaberhalter gemäß Fig. 18;
- Fig. 20a, 20b: und 20c Teilansichten der Anordnung aus Schaberhalter und Quertraverse in drei unterschiedlichen Montagestellungen mit den Einzelheiten einer diese Montagestellung herbeiführenden Montage- und Feststellvorrichtung;
- Fig. 20d: eine teilweise geschnittene Ansicht in Richtung des Pfeiles V in Fig. 20a.

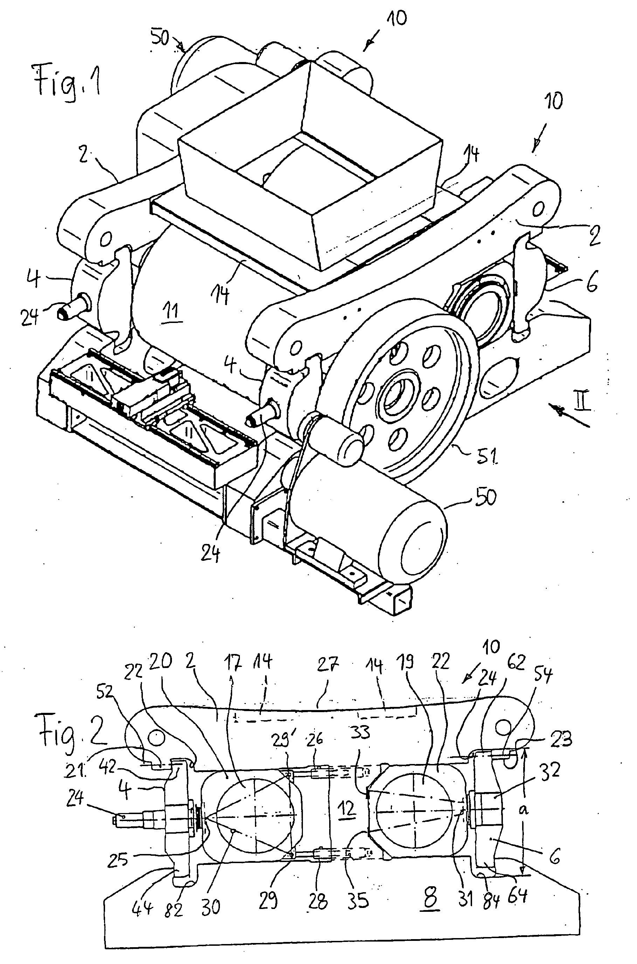

Aus den Figuren 1 und 2 ist eine erste Ausführung einer Walzenmühle gemäß der Erfindung erkennbar.

In der perspektivischen Darstellung der Fig. 1 schräg von oben und in Fig. 2 von links gesehen sind sämtliche Anbauteile und Baugruppen miteingezeichnet , die in Fig. 2 der besseren Übersichtlichkeit wegen weggelassen sind.

So sind in Fig. 1 nur bruchstückhaft die Teile eines Maschinenrahmens erkennbar, nämlich zwei obere Holme 2, die mit zwei Brückenpaaren mit jeweils zwei Brücken 4, 6, Stegen 12 und unteren Holmen 8 je einen Seitenständer 10 bilden, von denen der eine in Fig. 1 rechte in Fig. 2 vollständig zu sehen ist. Der Seitenständer aus den Holmen 6, 8 und dem Steg 12 bildet ein liegendes H. Ferner gehören zu dem Maschinenrahmen Traversen 14, welche die beiden oberen Holme 2 fest miteinander verbinden und in Fig. 2 gestrichelt angedeutet sind.

Die zwei unteren Holme 8 können auch in ein Maschinenbett integriert sein.

Die beschriebenen Bauteile 2, 8, 10, 12 bilden eine steife Einheit. Dabei überspannen die Holme 2 jeweils die einen Enden zweier parallel angeordneter Walzen der Walzenmühle, wobei die eine Walze in Fig. 1 mit der Bezugszahl 11 bezeichnet ist und in Fig. 2 die einen Enden dieser Walze und einer zweiten Walze 13 zu sehen und mit den Bezugszahlen 17 und 19 bezeichnet sind. Diese beiden Enden 17 und 19 sind ebenso wie die entgegengesetzten, in den Fig. 1 und 2 nicht sichtbaren anderen Ende der Walzen 11, 13 in Lagerblöcken 20, 22 gelagert. Der eine, in Fig. 2 linke Lagerblock 20 ist zwischen den beiden Holmen 2, 8 gleitverschieblich abgestützt. Auf seiner einen äußeren Seite steht er an einem Punkt in Kontakt mit einer die jeweilige Brücke 4 durchsetzenden Einstellspindel 24. Am anderen Ende des Lagerblocks 20 sind in der gleichen Ebene wie die Einstellspindel 24 die Kolbenstangen jeweils zweier steuerbarer hydraulischer Zylinder 26, 28 an außermittigen Punkten 29, 29' des Lagerblocks 19 angelenkt.

Zwischen den Punkten 25, 29, 29' ist ein strichpunktiert gezeichnetes Dreieck 30 aufgespannt, welches die Dreipunktaufhängung des Lagerblocks 20 veranschaulicht.

Durch Verstellen der Einstellspindel 24 in zu den Holmen 2, 8 paralleler Richtung lassen sich die Lagerblöcke 20 in dem Führungsspalt zwischen den beiden Holmen 2, 8 in Richtung zum Steg 12 und davon weg verstellen.

Der zweite Lagerblock 22 ist ebenfalls über eine Dreipunktabstützung im Zwischenraum zwischen den beiden Holmen 2, 8 aufgenommen. Eine geringfügige Verschiebebewegung des Lagerblocks 22 kann ebenfalls stattfinden, z. B. aufgrund des Ansprechens einer Überlastsicherung, die in der Brücke 6 der Fig. 2 bei 32 erkennbar ist.

Dabei liegt der eine Abstützpunkt bei 31 am inneren Ende der Überlastsicherung, während die beiden anderen Abstützpunkte 33, 35 am Steg 12 durch Messingplatten realisiert sein können.

Die Brücken 4, 6 haben an ihren Enden Stützabschnitte 42, 44 bzw. 62, 64, mit denen sie in Ausnehmungen 22, 24 des oberen Holmes 2 und in Ausnehmungen 82, 84 des unteren Holmes 8 eingreifen. Die Stützabschnitte 42, 62 und ggf. auch die Stützabschnitte 44, 64 sind mittels am Holm 2 durch strichpunktierte Linien symbolisierte Schrauben 52, 54 mit über die Brücken 4, 6 hinausreichenden Überhängen 21, 23 der Holme 2 verbunden.

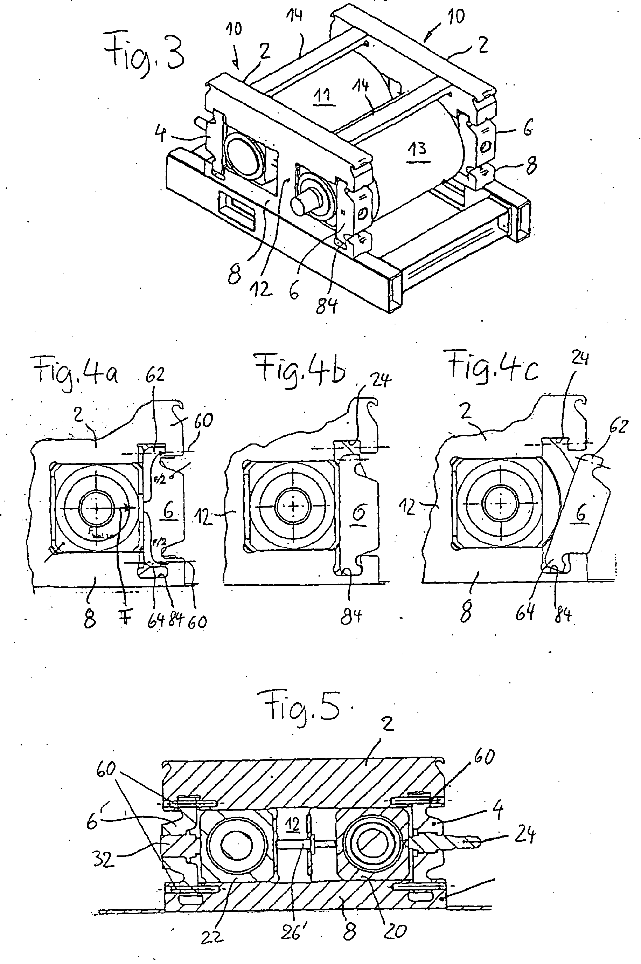

Die unteren Ausnehmungen 82, 84 des Holmes 8, die jeweils den oberen Ausnehmungen 22, 24 in dem Holm 2 gegenüberstehen, sind so tief bemessen, daß die Brücken 4, 6 nach Lösen der Schrauben 52, 54 in die unteren Ausnehmungen abgesenkt und dann durch Kippen aus den Seitenständern 10 herausgenommen werden können, wie anhand der Fig. 4a bis 4c zum zweiten Ausführungsbeispiel unten noch näher erläutert ist.

Der obere Holm 2 ist durch eine konkave Vertiefung 27 in Längsrichtung und durch verhältnismäßig große Überhänge 21, 23 in seiner Form so optimiert, daß er praktisch nicht auf Biegung (Spreizung) sondern nur auf Zug beansprucht wird, so daß der Holmquerschnitt voll zur Krafteinleitung genutzt werden kann. Dies ergibt bei guter Materialausnutzung und unter Vermeidung zusätzlicher Zuganker eine erhöhte Steifigkeit gegenüber herkömmlichen Walzenmühlen und somit ein besseres Mahlergebnis, d.h. bei gleicher Walzenspaltweite ein gleichmäßigeres und feineres Kornband.

Nur der Vollständigkeit halber seien anhand der Fig. 1 noch zusätzliche Bauteile bzw. Baugruppen erläutert: Mit 50 ist eine Motor-Getriebeeinheit bezeichnet, die über ein Schwungrad 51 jeweils eine Walze antreibt. Dieses Schwungrad 51 ist nur für die in Fig. 1 sichtbare Walze 16 gezeichnet.

Für den Betrieb der Walzenmühle werden die verschiebbaren Lagerblöcke über einen Verstellmechanismus synchron in Position gefahren. Die Fluidzylinder 26, 28 pressen die Lagerblöcke mit Verstellmechanismus in deren Endlage und eliminieren somit jegliches Systemspiel. Die Bewegungen der Walzen durch Kraftwechsel werden über die Fluidzylinder 26, 28 gedämpft. Wenn die Spreizbelastung der Walzen durch besonders harte Brocken, z.B. Gestein im Mahlgut, eine Überlastschwelle überschreitet, sprechen die Überlastsicherungen 32 in den Brücken 6 an, um die Walzenantriebe zu stoppen bzw. die Fluidzylinder 26, 28 zu entriegeln, so daß sich die Walzen nach Entblockierung der Lagerblöcke 20 unter Vergrößern des Walzenspaltes auseinanderbewegen können.

Aufgrund der beschriebenen Dreipunktaufhängung der Walzen wird ein bei bekannten Walzenmühlen zu beobachtende Tendenz zum Drehen bzw. Kippen der Lagerblöcke in Walzendrehrichtung und eine damit verbundene linienförmige Auflage der Lagerblöcke in ihren Führungen wirkungsvoll vermieden. Somit ist ein Klemmen oder Verkanten der Lagerblöcke im Betrieb nicht mehr möglich.

Statt der Fluidzylinder 26, 28, welche aktiv in beiden Richtungen oder nur als Dämpfungszylinder wirken können, können auch Vorspannschrauben mit Dämpfungselementen oder alternativ Stoßdämpfer eingesetzt werden. Diese Ausführungsmöglichkeiten können auch in Kombination eingesetzt werden.

Die Ausführung nach den Fig. 3 bis 5 zeigt eine einfachere Konstruktion, die sich jedoch hinsichtlich der Ausbildung der Brücken zur Abstützung der Lagerblöcke und deren Dreipunktaufhängung wie oben anhand der Fig. 2 beschrieben prinzipiell gleich ausgebildet ist. Gleiche bzw. funktionsgleiche Teile sind in den Fig. 3 bis 5 mit gleichen Bezugszahlen belegt. Unterschiedlich ist zunächst die einfachere Ausbildung der Seitenständer des Maschinenrahmens, bei denen die oberen Holme 2 gradlinig und mit geringeren Überhängen über die Brücken 4, 6 ausgebildet sind. Um gleichwohl den Effekt zu erreichen, daß die Holme praktisch ausschließlich auf Zug und nicht auf Biegung (Aufspreizung) beansprucht werden, sind hier zusätzlich zu den Verschraubungen 52, 54 gemäß Fig. 2 (diese Verschraubungen sind in den Fig. 3 bis 5 nicht dargestellt) Paßstifte 60 vorgesehen, die sich parallel zur Längsrichtung der Holme 2, 8 erstrecken. Diese Paßstifte 60 sind herauszunehmen, wenn die Brücken 4, 6 zur Wartung der Walzen, z.B. zum Vorsehen einer neuen Walzenummantelung, aus den Seitenständern 10 herausgenommen werden sollen.

Dieses Herausnehmen ist in den Fig. 4a, 4b und 4c veranschaulicht.

Fig. 4a zeigt die Brücken im Betrieb der Walzenmühle, in welchem die Bolzen 60 die Brücke 6 in dem in Fig. 5 gezeigten Zustand halten, in welchem der Lagerblock 22 gespannt gehalten ist, wobei die von der Walze ausgeübte Kraft F auf die Stützabschnitte 62, 64 der Brücke 6 und von dort auf die Überhänge der Holme 2, 8 umgeleitet wird, wie durch die Pfeile F/2 angedeutet ist.

Im Zustand nach Fig. 4b sind die Bolzen 60 herausgenommen, so daß die Brücken 6 nach Lösen der Schrauben 52, 54 (hier nicht gezeigt) in die unteren Ausnehmungen 84 abgesenkt und dann gemäß Fig. 4c aus den gegenüberliegenden Ausnehmungen 24, 84 zur Entnahme der Lagerblöcke 20 mit der zugehörigen Walze 18 herausgeschwenkt werden können. Zwar wäre denkbar, die Brücken 4, 6 durch seitliches Herausschieben aus den Ausnehmungen 24, 84 zu demontieren (in Fig. 4 senkrecht zur Zeichenebene), was jedoch aus Platzgründen in der Regel nicht möglich ist, weil dem andere Bauteile im Wege stehen, z.B. das Schwungrad 51 gemäß Fig. 1.

Fig. 5 zeigt anders als bei der Ausführung nach den Fig. 1 und 2 eine mittige Anordnung eines Dämpfungszylinders 26', so daß hier also keine Dreipunktaufhängung verwirklicht ist. Prinzipiell ist diese einfachere variable Abstützung des Lagerblockes 20 am Steg 12 auch denkbar, jedoch hinsichtlich einer eindeutigen, exakten Positionierung nicht so effektiv wie die anhand der Fig. 2 erläuterte Dreipunktabstützung.

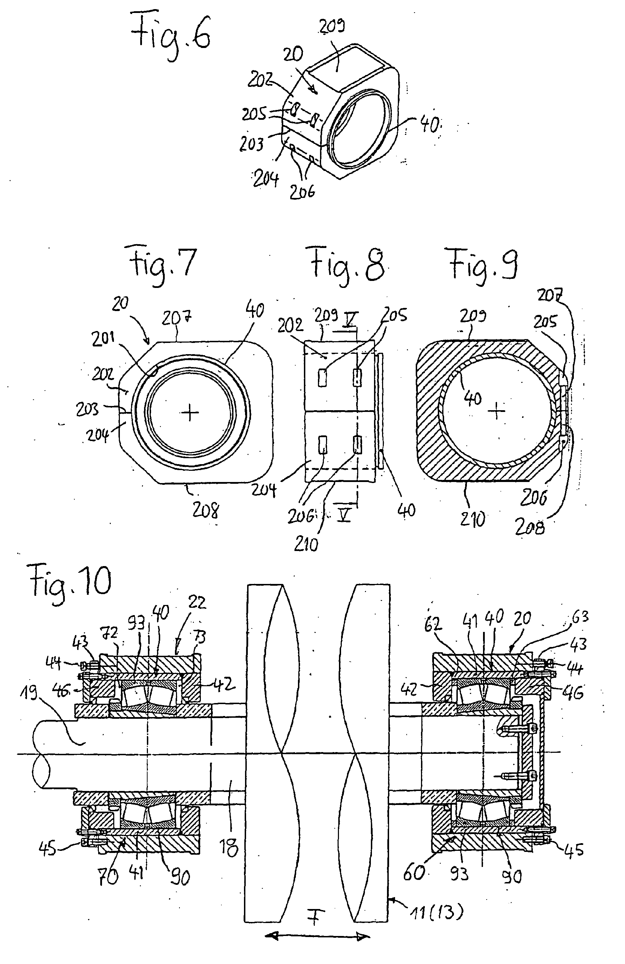

Anhand der Figuren 6 bis 9 ist nun ein Lagerblock 20 oder 22 gemäß der Erfindung mit eingeklemmtem Lagertopf im einzelnen beschrieben. Der Lagerblock 20 besteht aus einem C-förmigen Bauteil mit kreisförmiger Innenwand 201 und zwei C-Schenkeln 202, 204 mit Trennfuge 203, die in unmontiertem Zustand einen Spalt bildet (nicht gezeigt). In den C-Schenkeln 202, 204 sind Ausnehmungen 205, 206 gebildet, die über fluchtende Bohrungen 207, 208 (vgl. Fig. 9) in Verbindung stehen. Durch diese fluchtenden Bohrungen 207, 208 lassen sich die beiden C-Schenkel 202, 204 mittels Klemmschrauben gegeneinander ziehen, so daß ein Lagertopf 40, der einen geschlossenen Stützring 41 für das Pendelrollenlager 90 einfaßt, kraftschlüssig von der Innenwand 201 des Lagerblockes 20 eingeklemmt wird.

An der Kopfseite 207 und der Fußseite 208 jedes Lagerblockes sind Führungsflächen 209, 210 eingearbeitet (vgl. Fig. 6, 8 und 9).

Über diese Führungsflächen lassen sich die Lagerblöcke 20, 22 geführt zwischen entsprechenden Führungsflächen auf den einander zugewandten parallelen Innenseiten der Holme 2, 8 zur Einstellung des Walzenspaltes verschieben.

Die Fig. 10 zeigt eine Lagerung einer Walze 11 oder 13 der Walzenmühle in montiertem Zustand. Dabei ist das rechte Lager als Festlager 60 ausgebildet, bei dem der Lagertopf 40 mit dem Pendelrollenlager 90 gegenüber der Welle 18 und gegenüber dem zugehörigen Lagerblock 20 fixiert ist.

Das in Fig. 10 linke Lager ist als Loslager 70 konzipiert, bei dem das Wellenende 19 einschließlich des darauf montierten Pendelrollenlagers 90 sich gegenüber dem Lagertopf 40 und dem Lagerblock 20 in Achsrichtung verlagern kann. Dies ermöglicht ein beidseitig des Außenringes 93 des Pendelrollenlagers 90 vorgesehenes axiales Spiel 72, 73 zum Lagertopf, das bei dem Festlager 60 nicht vorhanden, sondern durch eingelegte Ringe 62, 63 überbrückt ist, so daß das Pendelrollenlager 60 im Lagertopf 40 des Festlagers axial fixiert ist.

Zu jedem Lagertopf 40 gehören außer dem Stützring 41 ein axial außen liegender Ring 46 und ein axial innen liegender Ring 42, die mit dem Lagertopf 40 starr verbunden sind. An dem Stützring 41 ist ein Stellring 43 mittels eines Kranzes von Anpreßschrauben 44 und Abdrückschrauben 45 befestigt. Durch Lösen der Abdrückschrauben und Stellen der Andrückschrauben läßt sich das Festlager 60 mitsamt der Welle 18 und der Walze 11 bzw. 13 in Richtung des Doppelpfeiles gegenüber dem Loslager 70 zur Ausrichtung auf die andere Walze axial verstellen, wobei die Lagerblöcke 20, 22 ihre axiale Position unverändert beibehalten.

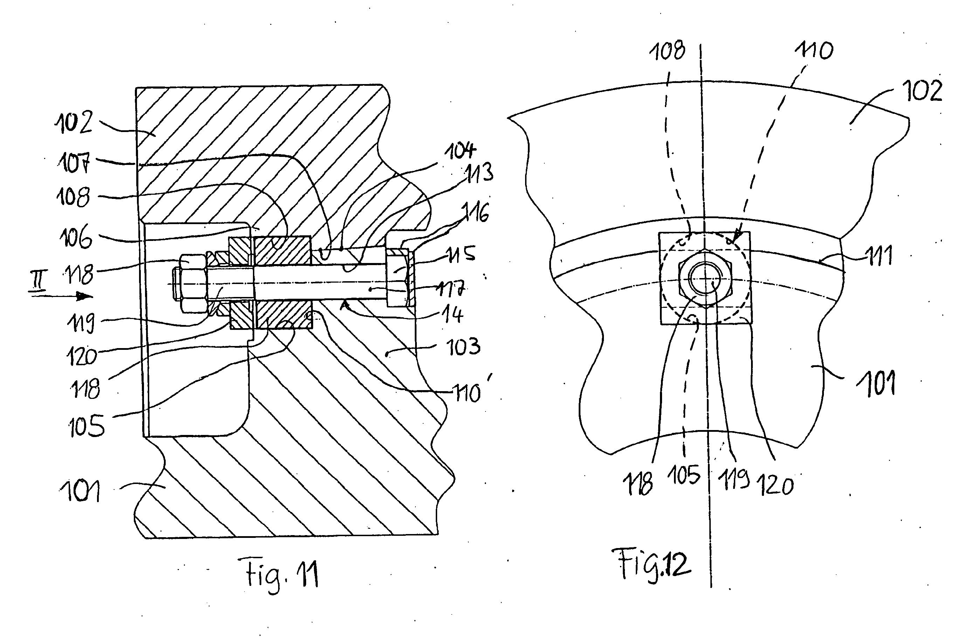

In den Figuren 11 und 12 ist mit 101 ein Walzenkörper und mit 102 ein darauf montierter Walzenmantel einer Walzenmühle gezeichnet. Der Walzenkörper 101 hat einen radialen Ringflansch 103 mit einer konischen Umfangsfläche 104. Auf seiner Außenseite ist der Ringflansch 104 mit teilzylindrischen Sacklöchern 105 versehen.

Der Walzenmantel 102 hat gegenüber dem Ringflansch 103 einen radial nach innen weisenden Ringvorsprung 106 mit einer zur konischen Umfangsfläche 104 passenden konischen Innenumfangsfläche 107 sowie mit teilzylindrischen Ausnehmungen 108, die zusammen mit den teilzylindrischen Ausnehmungen 105 am Ringflansch 103 zylindrische Sacklöcher 110 bilden (Fig. 12). Diese aus den Ausnehmungen 105, 108 zusammengesetzten Sacklöcher 110 überbrücken die Trennfuge 111 zwischen Walzenkörper 101 und Walzenmantel 102. Die zylindrischen Sacklöcher 110 sind in einem Kranz von beispielsweise sechs Sacklöchern gleichmäßig am Umfang von Walzenkörper und Walzenmantel verteilt.

Vom Boden 110' jedes Sackloches 110 ausgehend erstreckt sich eine mit dem Sackloch 110 koaxiale Bohrung 113 kleineren Durchmessers als das Sackloch 110 zur anderen Seite des Ringflansches 103.

In montiertem Zustand, der in den Fig. 11 und 12 dargestellt ist, erstreckt sich durch die Bohrung 113 und durch das Sackloch 110 ein Schraubbolzen 114, dessen Kopf 115 mittels einer Schraubenhalterung 116 an der Rückseite des Ringflansches 103 drehgesichert gehalten ist.

Auf dem glatten Schaft 117 des Schraubbolzens ist ein Paßkörper 118 in Gestalt eines Zylinders aufgeschoben, der in das Sackloch 110 paßt. Die Konusverbindung aus den Konusflächen 104, 107 ist mittels der durch den Schraubbolzen 114 mit Mutter 118 bewirkten Klemmung zusammengezogen, die durch Anziehen der Mutter 118 auf dem Gewindeabschnitt 119 des Schraubbolzens 114 erzeugt ist. Die Klemmkraft wird über eine quadratische, ebenfalls auf den Schraubbolzen aufgeschobene Sicherungsscheibe 120 am Walzenkörper und Walzenmantel abgestützt.

Es ist ersichtlich, daß die zylindrischen Paßkörper 118 in formschlüssiger Verbindung einerseits mit dem Walzenkörper 101 und andererseits dem Walzenmantel 102 stehen, wodurch die reibschlüssige Verbindung zwischen den konischen Umfangsflächen 104, 107 entlastet werden, weil die stark schwankenden Drehmomente, denen die Walze im Betrieb ausgesetzt ist, über die Paßkörper auf Walzenkörper und Walzenmantel abgeleitet werden. Eine sichere Klemmung von Walzenkörper und Walzenmantel wird also mit einem erheblich geringeren Schraubenanziehmoment der Klemmverbindung mit Schraubbolzen 114 und Mutter 118 erzielt.

Die Montage ist einfach: Zunächst werden die Schraubbolzen 114 in die Durchgangslöcher 113 von der in Fig. 11 rechten Seite her durch den Ringflansch 103 eingesteckt, wonach die Köpfe 115 der Schraubbolzen mittels der Schraubenhalterung 116 am Ringflansch 103 drehgesichert werden. Dann wird der Walzenmantel 102 von der linken Seite her auf die konische Umfangsfläche 104 in einer Drehlage aufgeschoben, in welcher die teilzylindrischen Öffnungen 108 auf die teilzylindrischen Öffnungen 105 im Walzenkörper ausgerichtet sind und so die Sacklöcher 110 bilden. Anschließend werden die zylindrischen Paßkörper 118 in die Sacklöcher 110 eingeschoben, worauf dann nach Aufschieben der Sicherungsscheiben 118 und zweier nicht bezeichneter Sicherungsringe die Muttern 118 aufgeschraubt und mit vorbestimmtem Drehmoment angezogen werden.

Die Demontage geht in umgekehrter Reihenfolge vor sich, wobei diese Demontage dadurch erleichtert sein kann, daß eine Abziehvorrichtung zum Herausziehen der Paßkörper 118 aus den Sacklöchern 110 vorgesehen sein kann.

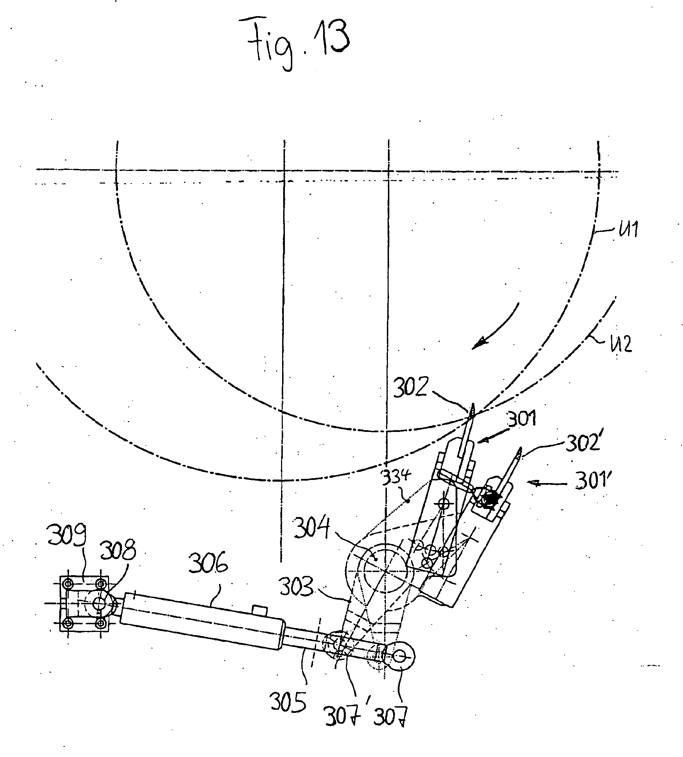

In Fig. 13 ist ein Schaber gemäß der Erfindung in einer Betriebsstellung mit der Bezugszahl 301 und in einer Ruhestellung mit der Bezugszahl 301' bezeichnet. In seiner Betriebsstellung ist der Schaber 301 an den Umfang U1 oder U2 einer hier nicht vollständig dargestellten Walze einer Walzenmühle zum Zerkleinern grobkörnigen Materials für die Keramikindustrie angestellt, während der Schaber in einer von dem Umfang der Walze abgestellten Stellung mit der Bezugszahl 301' bezeichnet ist.

Der Umfang U1 stellt den Walzenumfang mit neu aufgezogenem Walzenmantel dar. Dieser Umfang ist größer als der Umfang U2, bei dem die Walze in abgenutztem Zustand ohne neu aufgezogenen Walzenmantel dargestellt ist.

Der Schaber 301 ist über zwei gestrichelt dargestellte, schaberfeste Bügel 34 um eine Welle 304 verschwenkbar. Mit der Welle 304 drehfest ist ein Hebel 303, an welchem bei 307 die Kolbenstange 305 eines Fluidzylinders 306 (hydraulisch oder pneumatisch) angelenkt ist.

Der Fluidylinder 306 ist bei 308 über eine Platte 309 an dem nicht gezeigten Maschinenrahmen der Walzenmühle angelenkt.

Durch Einziehen der Kolbenstange 305 wird der Schaber 301 aus der Betriebsstellung 301 über den Hebel 303 und die Welle 304 in die Ruhestellung 301' geschwenkt und umgekehrt.

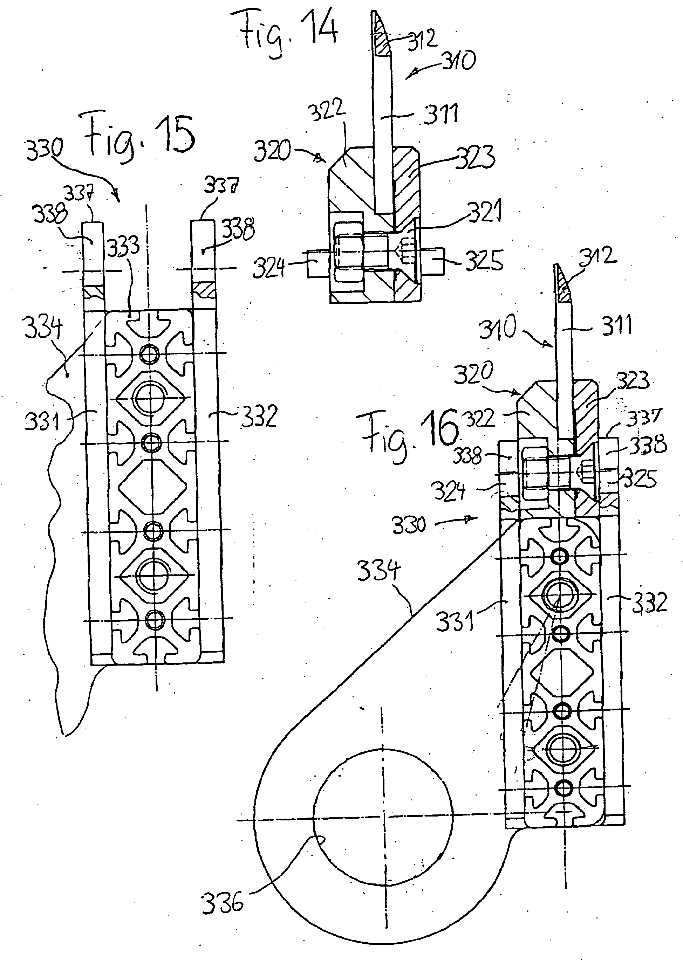

Die Bestandteile des Schabers und deren Montage und Demontage sind im einzelnen in den Fig. 14 bis 20 dargestellt.

Zunächst sei der Schaberaufbau anhand der Fig. 14 bis 16 beschrieben.

In Fig. 14 ist eine Anordnung aus Schaberschneide 310 und Schaberhalter 320 im Querschnitt gezeigt.

Die Schaberschneide 310 besteht aus einer länglichen Platte 311 mit eingelegtem Schneidenteil 312 aus Hartmetall. Die Schaberschneide 310 ist zwischen zwei mittels Schrauben 321 verschraubten Platten 322, 323 des Schaberhalters 320 eingeklemmt.

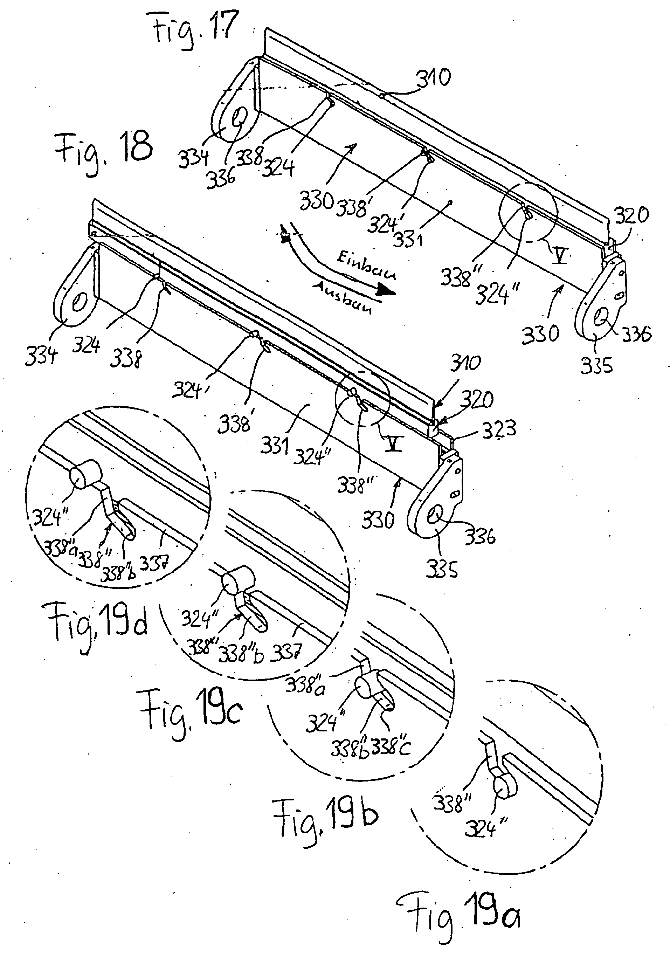

Von jeder Platte 322, 323 ragen in Querrichtung miteinander fluchtende Stifte 324, 325 weg, die ein Stiftpaar bilden. Mehrere, z. B. drei solche Stiftpaare 324, 325 sind über die Länge des Schaberhalters 320 verteilt, wie nachfolgend noch anhand der Fig. 17 bis 19 erläutert ist.

In Fig. 15 ist eine Quertraverse 330 dargestellt. Diese Quertraverse 330 besteht aus einem zentralen Aluminiumprofil 333 mit aufgesetzten Aluminiumplatten 331, 332.

An ihren beiden Enden hat die Quertraverse 330 je einen Bügel 334, 335 mit zum Durchmesser der Welle 4 (Fig. 13) passenden Loch 336. Die Quertraverse 330 ist über die Löcher 336 in den Bügeln 334, 335 auf die Welle 304 aufgeschoben und damit drehfest verbunden.

Die Platten 331, 332 der Quertraverse 330 haben von ihren Oberkanten 337 ausgehende, parallel verlaufende Schlitze 338, die zur Aufnahme der Stiftpaare 324, 325 bestimmt sind. In Fig. 15 und 16 sind diese Schlitze 338 im Bereich der teilgeschnittenen oberen Enden der Platten 331, 332 der Quertraverse zu erkennen.

Die Funktion der Stift-/Schlitz-Paarungen sei nun anhand der Fig. 17 bis 19 erläutert.

In Fig. 17 und 18 ist die Anordnung aus Schaberhalter 320 mit Schaberschneide 310 gemäß Fig. 14 und mit der Quertraverse 330 gemäß Fig. 15 in zwei unterschiedlichen Montagestellungen dargestellt, nämlich in Fig. 17 mit an der Quertraverse montiertem Schaberhalter 320 und in Fig. 18 mit von der Quertraverse demontiertem Schaberhalter. In den Fig. 17 und 18 ist zu erkennen, daß in der Platte 331 drei Schlitze 338, 338', 338" von der Oberkante 337 der Platte 331 ausgehen, die von der Kante 337 steil ausgehende Schlitzabschnitte 338a, 338'a, 338"a und daran anschließende, flachere Schlitzabschnitte 338b, 338'b, 338"b haben. Jeder Schlitzgrund bzw. jedes Schlitzende 338c, 338'c, 338"c ist mit einem zum zugehörigen Stift 324, 324', 324" passenden Radius gerundet.

Aus den Fig. 17 und 18 geht ferner hervor, daß jedes Stift-/Schlitz-Paar andere Abmessungen als die übrigen Stift-/Schlitz-Paare aufweist. Den kleinsten Durchmesser und die kleinste Schlitzbreite hat das Stift-/Schlitz-Paar 324, 338 in den Fig. 17 und 18 links oben. Den größten Durchmesser und die größte dazu passende Schlitzbreite hat das Stift-/Schlitz-Paar 324", 338" in den Fig. 17 und 18 rechts unten. Einen mittleren Durchmesser und eine mittlere dazu passende Schlitzbreite hat das in den Fig. 17 und 18 mittlere Stift-/Schlitz-Paar 324', 338'.

Die während einer Demontage des Schaberhalters 320 mit Schaber 310 von der Quertraverse 330 sich ergebenden, unterschiedlichen Positionen von Stift 324" zum zugehörigen Schlitz 338" sowie die Gestalt des Schlitzes mit einem von der Kante 337 der Platte 331 ausgehenden steilen Schlitzabschnitt 338"a und einem daran anschließenden flachen Schlitzabschnitt 338"b bis zum abgerundeten Schlitzgrund 338"c gemäß der Einzelheit V in den Fig. 17 und 18 werden unmittelbar aus der Figurenfolge 19a bis 19d deutlich.

In den Fig. 17 bis 19 erscheinen Stift-/Schlitz-Paare nur für die Platte 331 der Quertraverse 330. Es versteht sich jedoch, daß entsprechende Stift-/Schlitz-Paare mit jeweils fluchtenden Stiften auch der Platte 332 der Quertraverse 330 zugeordnet sind, wie z. B. Fig. 16 zeigt. Man erkennt dort außer dem Stift-/Schlitz-Paar 324, 338 auf der Seite der Platte 331 ein Stift/Schlitz-Paar 325, 338 auf der Seite der Platte 332.

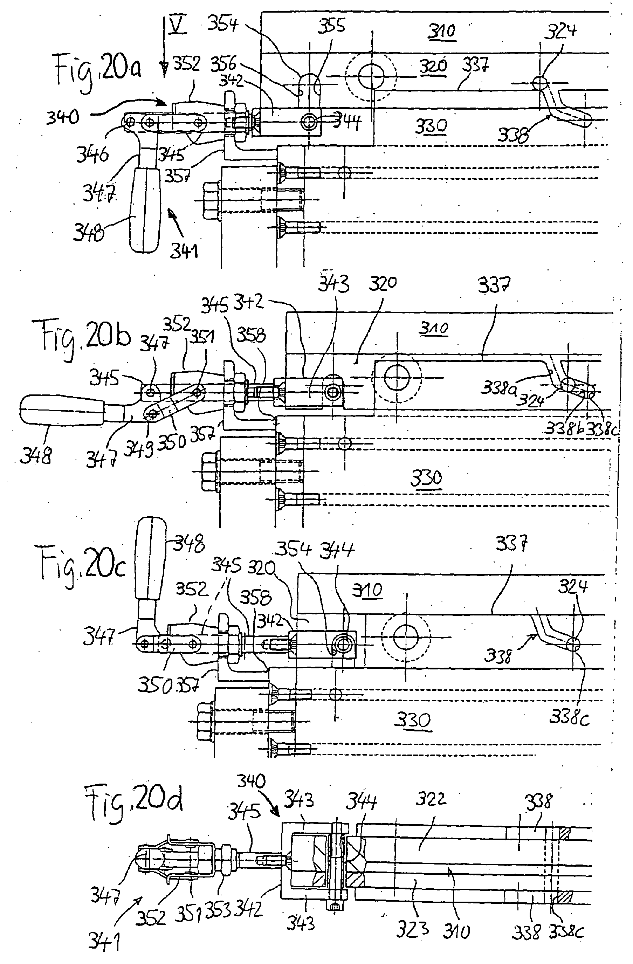

Anhand der Fig. 20a-20d sei nun zunächst eine Montage- und Feststellvorrichtung erläutert, die auch am linken Ende der Quertraverse 330 angebracht ist und insgesamt mit dem Bezugszeichen 340 bezeichnet ist (in den Fig. 13 bis 19 nicht dargestellt).

Die Montage- und Feststellvorrichtung 340 hat eine Kniehebeleinrichtung 341 mit einem U-förmiger Halter 342, der zwischen seinen U-Schenkeln 343 eine drehbare Rolle 344 hält. An dem Halter 342 ist eine Schubstange 345 befestigt, an deren Ende bei 346 ein Kniehebel 347 angelenkt ist, der mittels eines Handgriffs 348 um 180° schwenkbar ist. Die beiden Grenzlagen des Kniehebels 347 sind in den Fig. 20a und 20c gezeigt, wobei Fig. 20a den Schaberhalter 320 mit Schaberschneide 310 unmittelbar nach dem Ausfahren der Stifte 324, 325 aus den Schlitzen 338 und die Fig. 20c die vollständig montierte Position von Schaberhalter mit Schaberschneide in der Quertraverse 330 zeigt, bei der die Stifte 324 am Grund 338c der Schlitze 338 anliegen.

Fig. 20b zeigt eine Zwischenstellung, bei der sich die Stifte 324 etwa am Übergang zwischen dem steilen Schlitzabschnitt 38a und dem flacheren Stiftabschnitt 338b befindet.

Aus Fig. 20b erkennt man am besten, daß am Kniehebel 347 bei 349 eine Lasche 350 angelenkt ist, die ihrerseits bei 351 mit einem ebenfalls U-förmigen Bügel 352 verbunden ist, der über eine Mutternanordnung 353 längs der Schubstange 345 gleitverschieblich ist.

Am Ende des Schaberhalters ist ein vertikaler Querschlitz 354 vorgesehen, an dessen vertikalen Flanken 355 und 356 die Rolle 344 abwälzen kann.

Die derart aufgebaute Montage- und Feststellvorrichtung 340 ist über einen Winkel 357 an der Quertraverse bei 358 befestigt, z. B. angeschweißt.

Soll der Schaberhalter 320 nach Wartung oder Auswechselung der Schaberschneide 310 an der Quertraverse 330 angebracht werden, so wird zunächst der Schaberhalter 320 mit daran vormontierter Schaberschneide 310 in den oberen U-Schlitz der Quertraverse 330 zwischen den beiden Platten 331, 332 (Figur 15) eingeschoben, bis die Stifte 324, 325 sich unmittelbar vor der Mündung der Schlitze 338 befinden (Fig. 20a). Dann wird der Handgriff 348 aus der Position gemäß Fig. 20a nach oben geschwenkt. Dabei läuft die Rolle 344 in den Schlitz 354 des Schaberhalters 320 ein und wälzt an der Flanke 355 dieses Schlitzes 354 ab, wobei aufgrund der von der Rolle 344 über die Flanke 355 auf den Schaberhalter 320 übertragenen Kraft der Schaberhalter 320 nach rechts gedrückt wird und sich gleichzeitig durch Einlaufen der Stifte 324, 325 in die Schlitze 38 kontrolliert absenkt, bis schließlich nach vollständigem Umlegen des Kniehebels 347 mittels des Handgriffes 348 gemäß Fig. 20c die Stifte 324, 325 vollständig in die Schlitze 338 eingefahren sind und durch die Kniehebeleinrichtung 341 über die Rolle 344 und den Schlitz 354 gegen den Grund 338c der Schlitze 338 lösesicher eingedrückt gehalten sind.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Walzenmühle zur Zerkleinerung von grobkörnigem Material mit zwei Walzen (11,13), die im Abstand voneinander in einem Maschinenrahmen jeweils in zwei Lagerblöcken (20,22) gegeneinander verstellbar gelagert sind, um den Walzenspalt einzustellen, wobei die Lagerblöcke (20) einer Walze (11,13) im Maschinenrahmen mittels einer Verstelleinrichtung (24) relativ zu der anderen Walze (13,11) entgegen der Kraft einer Dämpfungseinrichtung (26,28) verschiebbar angeordnet sind,
wobei eine Überlastsicherung (32) vorgesehen ist, die anspricht, wenn die durch das Material erzeugte Spreizkraft auf die beiden Walzen (11,13) einen zulässigen Wert überschreitet, und
wobei die Lagerblöcke (20,22) zwischen zwei sich quer zu den Walzen erstreckenden Holmen (2,8) des Maschinenrahmens verschieblich über je eine Brücke (4,6) abgestützt sind, die mit Stützabschnitten (42,44;62,64) der Brückenenden in gegenüberstehende Ausnehmungen (22,24;82,84) an den Holmen (2,8) eingreift.

2. Walzenmühle nach Anspruch 1, **dadurch gekennzeichnet, daß** die Stützabschnitte (42,44;62,64) der Brückenenden mit den Holmen (2,8) lösbar verbunden sind, und die Anordnung so getroffen ist, daß die Brücken (4,6) zur Wartung oder zum Austausch von Walzen (11,13) von dem Maschinenrahmen entfernbar sind.

3. Walzenmühle nach Anspruch 2, **dadurch gekennzeichnet, daß** die Stützabschnitte (42,44;62,64) der Brückenenden mit den Holmen (2,8) mittels Schrauben (52,54) verbunden sind, die sich in Richtung parallel zur Verstellrichtung der Walzen (11,13) erstrecken.

4. Walzenmühle nach Anspruch 2 oder 3, **dadurch gekennzeichnet, daß** der Abstand (a) zwischen den Ausnehmungen (22,82;24,84) für eine Brücke (4,6) so groß bemessen ist, daß die Brücke in die untere Ausnehmung abgesenkt und aus dieser aus dem Maschinenrahmen herausgekippt werden kann.

5. Walzenmühle nach einem der Ansprüche 1 bis 4, **dadurch gekennzeichnet, daß** zur Aufnahme der von den Walzen (11,13) auf die Brücken (4,6) ausgeübten Spreizkräfte im Maschinenrahmen die Brückenenden mit den Holmen (2,8) mittels Paßstiften (60) verbolzt sind.

6. Walzenmühle nach einem der Ansprüche 1 bis 5, **dadurch gekennzeichnet, daß** zur Aufnahme der von den Walzen (11,13) auf die Brücken ausgeübten Spreizkräfte im Maschinenrahmen die Form der Holme (2) durch konkave Krümmung (27) in Längsrichtung und durch Vorsehen von Überhängen (261,281) über die Brücken hinaus optimiert ist.

7. Walzenmühle nach einem der vorangehenden Ansprüche, **dadurch gekennzeichnet, daß** die Lagerblöcke (20,22) beider Walzen (11,13) jeweils über eine Dreipunktabstützung im Maschinenrahmen abgestützt sind, wobei ein Abstützpunkt (25,31) der Brücke (4,6) und die beiden übrigen Abstützpunkte (29,29';33,35) einem die Holme (2,8) jedes Seitenständers (10) miteinander verbindenden Steg (12) zugeordnet sind.

8. Walzenmühle nach Anspruch 7, **dadurch gekennzeichnet, daß** jeder Lagerblock (20) der einen verstellbaren Walze (11) auf seiner der zugehörigen Brücke zugewandten Außenseite über eine in der Brücke fixierte Verstellspindel (24) und auf seiner dem Steg zugewandten Innenseite über zwei entgegengesetzt zur Verstellrichtung wirkende Dämpfungseinrichtungen (26,28) abgestützt ist.

9. Walzenmühle nach Anspruch 7 oder 8, **dadurch gekennzeichnet, daß** jeder Lagerblock (22) der anderen Walze (13) auf seiner der Brücke (6) zugewandten Außenseite über eine an der Brücke angebrachte Überlastsicherung (32) und auf seiner Innenseite an zwei Lagerstellen (33,35) am Steg abgestützt ist.

10. Walzenmühle nach Anspruch 8 oder 9, **dadurch gekennzeichnet, daß** die Dämpfungselemente (26,28) Fluidzylinder sind.

11. Walzenmühle nach einem der Ansprüche 8 bis 10, **dadurch gekennzeichnet, daß** die Überlastsicherung (32) eine federnd nachgiebige Vorrichtung, wie ein Fluidzylinder, mit einer Überlastschwelle ist, bei deren Überschreiten die Vorrichtung zur Entlastung bzw. zum Stop der Walzen (11,13) auslöst.

12. Walzenmühle nach einem der Ansprüche 1 bis 11, **dadurch gekennzeichnet, daß** zumindest eine Walze (11, 13) ein Lagerpaar aus Festlager (60) und Loslager (70) aufweist, daß in jedem dieser beiden Lager ein Lagertopf (40) mit einem geschlossenen Ring (41) ein Gleit- oder Wälzlager (90) zur Lagerung der Walzenwelle (18) umgibt und der Lagertopf (40) von einem Lagerblock (20; 22) eingeklemmt ist, und daß der Lagertopf (40) des Festlagers (60) mitsamt der Walzenwelle (18) relativ zu seinem Lagerblock (20) und zum Loslager (70) in Achsrichtung einstellbar ist, um die eine Walze bezüglich der anderen Walze längsauszurichten.

13. Walzenmühle nach Anspruch 12, **dadurch gekennzeichnet, daß** der Lagerblock (20; 22) am Maschinenrahmen in Richtung quer zu den Walzen (11, 13) verschieblich geführt ist, um den Walzenspalt zwischen den beiden Walzen einstellen zu können und
daß an den gegenüberliegenden Kopf und Fußseiten (207, 208) des Lagerblockes (20) parallele Führungsflächen (209, 210) zum Zusammenwirken mit Führungen am Holmen (2, 8) des Maschinenrahmens vorgesehen sind.

14. Walzenmühle nach Anspruch 12 oder 13, **dadurch** geke**n**nzeichn e t, daß der Lagerblock (20; 22) C-förmig mit innen kreisförmiger Kontur (201) zur Einfassung des Umfangs des Lagertopfes (40) ausgebildet ist und mit seinen C-Schenkeln (202, 204) mittels einer Klemmverbindung an den Umfang des Lagertopfes anpreßbar ist.

15. Walzenmühle nach Anspruch 14, **dadurch gekennzeichnet, daß** die Klemmverbindung sich tangential zum Lagertopf durch die C-förmigen Enden (202, 204) erstreckende Klemmschrauben umfaßt.

16. Walzenmühle nach einem der Ansprüche 12 bis 15, **dadurch gekennzeichnet, daß** der Lagertopf (40) einen axial neben dem Lagerblock (20, 22) angeordneten Stellring (43) aufweist, über den der Lagertopf mittels eines Kranzes von Anpreßschrauben (44) und Abdrückschrauben (45) axial bezüglich des Lagerblockes verstellbar ist.

## Claims

1. Roller crusher for grinding coarse material with two rollers (11,13) mounted adjustably against each other at a distance from each other in a machine frame in two bearing blocks (20,22), respectively, in order to adjust the roller gap,
wherein the bearing blocks (20) of a roller (11,13) are arranged in the machine frame such as to be displaceable relative to the other roller (13,11) by means of an adjustment mechanism (24) against the force of a damping device (26,28),
wherein an overload protection (32) is provided that becomes activated when the spreading force generated by the material and acting on the two rollers (11,13) exceeds a permissible value, and
wherein the bearing blocks (20,22) are each displaceably supported between two spars (2,8) by a bridge (4,6), the spars extending transversely to the rollers, and the bridge engaging with the spars (2,8) at opposing recesses (22,24;82,84) by means of support sections (42,44;62,64) of the bridge extremities.

2. Roller crusher according to claim 1, **characterised in that** the support sections (42,44;62,64) of the bridge extremities are detachably connected to the spars (2,8) and that the arrangement is such that the bridges (4,6) are removable from the machine frame for maintenance or for replacement of the rollers (11,13).

3. Roller crusher according to claim 2, **characterised in that** the support sections (42,44;62,64) of the bridge extremities are connected to the spars (2,8) by means of bolts (52,54) extending parallel to the adjusting direction of the rollers (11,13).

4. Roller crusher according to claim 2 or 3, **characterised in that** the distance (a) between the recesses (22,82;24,84) for a bridge (4,6) is sufficiently large to enable lowering the bridge into the lower recess so that it can be tilted out of the recess out of the machine frame.

5. Roller crusher according to one of the claims 1 to 4, **characterised in that** the bridge extremities are bolted to the spars (2,8) by means of dowel pins (60) for receiving the spreading forces exerted by the rollers (11,13) onto the bridges (4,6) in the machine frame.

6. Roller crusher according to one of the claims 1 to 5, **characterised in that** the form of the spars (2) is optimised by means of a concave curvature (27) in longitudinal direction and by providing extensions (261,281) beyond the bridges for receiving the spreading forces exerted by the rollers (11,13) onto the bridges in the machine frame.

7. Roller crusher according to one of the preceding claims, **characterised in that** the bearing blocks (20,22) of both rollers (11,13) are respectively supported in the machine frame by a three-point-support, wherein one support point (25,31) is allocated to the bridge (4,6), and the two remaining support points (29,29';33,35) are allocated to a cross piece (12) connecting the spars (2,8) of each side support (10).

8. Roller crusher according to claim 7, **characterised in that** each bearing block (20) of the one adjustable roller (11) is supported at its outer side, facing the respective bridge, via an adjustment spindle (24) fixed in the bridge, and at its inner side, facing the cross piece, via two damping devices (26,28) acting oppositely to the adjustment direction.

9. Roller crusher according to claim 7 or 8, **characterised in that** each bearing block (22) of the other roller (13) is supported at its outer side, facing the bridge, via an overload protection (32) attached at the bridge (6), and at its inner side at two mounting positions (33,35) at the cross piece.

10. Roller crusher according to claim 8 or 9, **characterised in that** the damping elements (26,28) are fluid cylinders.

11. Roller crusher according to one of the claims 8 to 10, **characterised in that** the overload protection (32) is a spring-type resilient device, like a fluid cylinder, with an overload threshold, at the exceedance of which the device triggers releasing or stopping the rollers (11,13).

12. Roller crusher according to one of the claims 1 to 11, **characterised in that** at least one roller (11,13) features a pair of bearings consisting of a fixed bearing (60) and a floating bearing (70), that in each of the two bearings a bearing housing (40) with a closed ring (41) surrounds a slide or roller bearing (90) for mounting the roller shaft (18), wherein the bearing housing (40) is clamped by a bearing block (20,22), and that the bearing housing (40) of the fixed bearing (60) is adjustable together with the roller shaft (18) in axial direction relative to its bearing block (20) and to the floating bearing (70) in order to bring in line the longitudinal extension of one roller with the one of the other roller.

13. Roller crusher according to claim 12, **characterised in that** the bearing block (20,22) is slidingly guided at the machine frame in a direction transverse to the rollers (11,13) in order to be able to adjust the gap between the rollers and
that parallel guiding surfaces (209,210) are provided at the opposing head and foot sides (207,208) of the bearing block (20) for cooperating with guiding devices at the spars (2,8) of the machine frame.

14. Roller crusher according to one of the claim 12 or 13, **characterised in that** the bearing block (20,22) is formed in a C-shape with a circular inner contour (201) for encompassing the circumference of the bearing housing (40) and can be pressed with the legs (202,204) of its C-shape to the circumference of the bearing housing by means of a clamping connection.

15. Roller crusher according to claim 14, **characterised in that** the clamp connection comprises clamping screws extending tangentially through the C-shaped extremities (202,204) to the bearing housing.

16. Roller crusher according to one of the claims 12 to 15, **characterised in that** the bearing housing (40) features an adjustment ring (43), arranged axially beside the bearing block (20,22), via which the bearing housing is axially adjustable with respect to the bearing block by means of a ring of clamping screws (44) and jacking screws (45).

## Revendications

1. Broyeur à rouleaux pour concasser un matériau à gros grains avec deux rouleaux (11,13) montés de façon ajustable l'un contre l'autre à une distance entre eux dans un bâti de machine dans deux blocs de palier (20,22) respectivement pour ajuster l'interstice des rouleaux,
les deux blocs de palier (20) d'un rouleau (11,13) étant agencés de façon déplaceable par moyen d'un dispositif d'ajustement (24) relatif à l'autre rouleau (13,11) contre la force d'un dispositif d'amortissement (26,28),
une protection de surcharge (32) étant pourvue qui se met en action lorsque la force d'écartement exercé par le matériau sur les deux rouleaux (11,13) dépasse une valeur admissible, et
les deux blocs de palier (20,22) étant déplaceable entre deux barres (2,8) du bâti de machine, qui s'étendent en travers par rapport aux rouleaux, et étant en appui respectivement sur un pontet (4,6) engagé par des sections d'appui (42,44;62,64) des extrémités de pontet avec les barres (2,8) dans des niches (22,24;82,84) agencées face à face.

2. Broyeur à rouleaux selon la revendication 1,**caractérisé en ce que** les sections d'appui (42,44;62,64) des extrémités des pontets sont liées avec les barres (2,8) de façon détachable, et que l'agencement et tel que les pontets (4,6) sont amovibles du bâti de machine à l'effet d'entretien ou pour le remplacement des rouleaux (11,13).

3. Broyeur à rouleaux selon la revendication 2, **caractérisé en ce que** les sections d'appui (42,44;62,64) des extrémités des pontets sont liées avec les barres (2,8) par des visses (52,54) s'étendant dans une direction parallèle au dispositif d'ajustement des rouleaux (11,13).

4. Broyeur à rouleaux selon la revendication 2 ou 3, **caractérisé en ce que** la distance (a) entre les niches (22,24;82,84) pour un pontet (4,6) est tel que le pontet peut être abaissé dans la niche inférieure et peut être basculé d'elle du bâti de machine.

5. Broyeur à rouleaux selon l'une des revendications 1 à 4, **caractérisé en ce que** les extrémités des pontets sont boulonnées aux barres (2,8) par des goujons (60) pour la réception des forces d'écartement exercées par les rouleaux (11,13) sur les pontets (4,6) dans le bâti de machine.

6. Broyeur à rouleaux selon l'une des revendications 1 à 5, **caractérisé en ce que** la forme des barres (2) est optimisée par une courbure (27) concave en direction longitudinale et par pourvoir des extensions (261,281) au-delà des pontets pour la réception des forces d'écartement exercés par les rouleaux (11,13) sur les pontets (4,6) dans le bâti de machine.

7. Broyeur à rouleaux selon l'une des revendications précédentes, **caractérisé en ce que** les blocs de palier (20,22) des deux rouleaux (11,13) sont supportés par un appui à trois points, dans lequel un point d'appui (25,31) est attribué au pontet (4,6) et les deux autres points d'appui (29,29';33,35) sont attribués à une traverse (12) connectant les barres (2,8) de chaque support latéral (10).

8. Broyeur à rouleaux selon la revendication 7, **caractérisé en ce que** chaque bloc de palier (20) de l'un rouleau ajustable (11) est appuyé à son coté extérieur faisant face au pontet correspondant par une broche d'ajustage (24) fixé dans le pontet, et à son coté intérieur faisant face à la traverse par deux dispositifs d'amortissement (26,28) actionnant en sens opposé à la direction d'ajustement.

9. Broyeur à rouleaux selon la revendication 7 ou 8, **caractérisé en ce que** chaque bloc de palier (22) de l'autre rouleau (13) est appuyé à son coté extérieur faisant face au pontet (6) par une protection de surcharge (32) attaché au pontet, et à son coté intérieur par deux endroits de support (33,35) à la traverse.

10. Broyeur à rouleaux selon la revendication 8 ou 9, **caractérisé en ce que** les dispositifs d'amortissement (26,28) sont des cylindres de fluide.

11. Broyeur à rouleaux selon l'une des revendications 8 à 10, **caractérisé en ce que** la protection de surcharge (32) est un dispositif élastiquement souple, tel qu'un cylindre de fluide, avec un seuil de surcharge au dépassement duquel le dispositif déclenche le délestage ou l'arrêt des rouleaux (11,13).

12. Broyeur à rouleaux selon l'une des revendications 1 à 11, **caractérisé en ce qu'**au moins un rouleau (11,13) présente une paire de paliers comprenant un palier fixe (60) et un palier libre (70), que dans chacun des paliers un boîtier (40) de palier avec un anneau refermé (41) entoure un palier (90) à glissement ou à rouleaux pour loger l'arbre (18) du rouleau, et le boîtier (40) de palier est serré par un bloc de palier (20,22), et que le boîtier (40) de palier du palier fixe (60) en ce compris l'arbre (18) du rouleau est ajustable relatif à son bloc de palier (20) et au palier libre (70) en direction axiale pour aligner l'extension longitudinal de l'un rouleau par rapport à celle de l'autre rouleau.

13. Broyeur à rouleaux selon la revendication 12, **caractérisé en ce que** le bloc de palier (20,22) est guidé de façon glissante au bâti de machine en direction transversale par rapport aux rouleaux (11,13) pour pouvoir ajuster l'interstice entre les rouleaux, et
que des plans de guidage parallèle (209,210) sont pourvus aux faces opposées (207,208) de tête et de pied du bloc de palier (20) pour coopérer avec des guidages aux barres (2,8) du bâti de machine.

14. Broyeur à rouleaux selon la revendication 12 ou 13, **caractérisé en ce que** le bloc de palier (20,22) est formé en forme de C avec un contour circulaire intérieur (201) pour cercler la circonférence du boîtier (40) de palier, et peut être pressé avec ses pattes de C (202,204) vers la circonférence du boîtier de palier par un assemblage serré.

15. Broyeur à rouleaux selon la revendication 14, **caractérisé en ce que** l'assemblage serré comprend des visses de serrage s'étendant de façon tangentielle au boîtier de palier à travers des extrémités en forme de C (202,204).

16. Broyeur à rouleaux selon l'une des revendications 12 à 15, **caractérisé en ce que** le boîtier (40) de palier présente un anneau d'ajustage (43) agencé axialement à coté du bloc de palier (20,22) par lequel le boîtier de palier peut être ajusté axialement par rapport au bloc de palier au moyen d'une couronne de visses de serrage (44) et de visses d'écartement (45).
